**Europäisches Patentamt**

**European Patent Office**

**Office européen des brevets**

(19)

(11) Publication number: **0 314 640 B1**

# (12) EUROPEAN PATENT SPECIFICATION

(45) Date of publication of patent specification :
27.11.91 Bulletin 91/48

(51) Int. Cl.⁵ : **A01B 63/112, A01B 63/111, A01B 63/114**

(21) Application number : **88830439.1**

(22) Date of filing : **25.10.88**

(54) A stress sensor for the electronic control of hydraulic power-lifts fitted to agricultural tractors.

(30) Priority : **26.10.87 IT 5375787 U**

(43) Date of publication of application :
**03.05.89 Bulletin 89/18**

(45) Publication of the grant of the patent :
**27.11.91 Bulletin 91/48**

(84) Designated Contracting States :
**AT CH DE ES FR GB LI**

(56) References cited :
**EP-A- 0 112 642**
**DE-B- 1 116 461**
**DE-B- 1 209 789**
**FR-A- 2 188 930**
**US-A- 3 516 498**

(73) Proprietor : **SAME S.p.A.**
**Viale F. Cassani, 14**
**I-24047 Treviglio Bergamo (IT)**

(72) Inventor : **Bergese, Claudio c/o Same S.p.A.**
**Viale F. Cassani, 14**
**I-24047 Treviglio (Bergamo) (IT)**
Inventor : **Hampel, Gerard c/o Same S.p.A.**
**Viale F. Cassani, 14**
**I-24047 Treviglio (Bergamo) (IT)**

(74) Representative : **Buzzi, Franco et al**
**c/o Jacobacci-Casetta & Perani S.p.A. Via Alfieri, 17**
**I-10121 Torino (IT)**

## Description

The present invention relates generally to tractors comprising a hydraulic power-lift for the linkage of the implements, including two lower rods mounted on a support shaft, two arms connected to the lower rods and a hydraulic operating unit for operating the arms of the power-lift.

In power-lifts of the stress-controlled type, the hydraulic operating unit for the arms of the power-lift is piloted by a device which is sensitive to the stresses transmitted by the implement so that the depth of working of the implement is varied with any variations in the stress as long as this stress remains below a predetermined value.

Such control devices are conventionally of a mechanical-hydraulic type and normally include a pivoted control lever which is articulated at its lower end to one of the lower rods for the implement, and the upper end of which actuates the hydraulic operating unit for the arms of the power-lift.

More recently, such mechanical-hydraulic control devices have been replaced by electronic control systems which are more advantageous in terms of constructional simplicity, reliability and operative precision. As disclosed for instance in EP-A-112642, these electronic systems generally include an electronic unit for controlling the hydraulic operating unit for the arms of the power-lift, and sensor means operatively associated with the electronic unit for sensing the stresses transmitted in use by the implement to the linkage. According to the prior art, such sensor means are generally constituted by detectors of magnetic or equivalent type applied in correspondence with the pins articulating the lower rods to the structure of the tractor.

This arrangement involves the need to make substantial structural modifications to conventional mechanical-hydraulic control devices and this is obviously burdensome for the manufacturers. Moreover, the installation of the magnetic detectors in zones close to the ground may involve risks of their malfunction or damage, which would thus compromise the effective operation of the electronic control device.

The object of the present invention is to avoid these disadvantages and to provide an electronically controlled hydraulic power-lift of the type defined above, adaptable without any particular constructional modifications to mechanically-hydraulically controlled devices and at the same time having a greater operative reliability than currently known electronic control systems.

According to the invention, this object is achieved by virtue of the feature set forth in the characterising portion of claim 1.

By virtue of this solution, the electronic control system may easily be adapted to the structure of mechanical-hydraulic stress-controlled power-lifts without particular modifications. Moreover, the location of the extensometric sensor in correspondence with an upper zone of the structure of the tractor makes it easy to protect and cover effectively against risks of soiling and damage during use of the tractor.

The invention will now be described in detail with reference to the appended drawings, provided purely by way of non-limiting example, in which ;

Figure 1 is a schematic side elevational view of a tractor provided with an electronic stress-controlled hydraulic power-lift according to the invention, and

Figure 2 shows a detail of Figure 1 on an enlarged scale.

With reference to the drawings, a tractor, schematically indicated 1, has at its rear end a three-point linkage, generally indicated 2, for an implement 3.

The three-point linkage 2 includes in known manner a pair of lower bars or rods 4 and an upper rod 5 articulated to the rear end of the structure of the tractor 1 and the front end of the implement 3. The support shaft for the rods 4 is indicated 4a.

The linkage 2 further includes a hydraulic power-lift, generally indicated 6, including, also in known manner, a pair of pivoted arms 7 connected to the rods 4 by respective tie rods 8 and a hydraulic operating unit 9 for actuating the arms 7.

The hydraulic operating unit 9 is operatively associated with an electronic control device arranged to vary the depth of working of the implement 3, through the operation of the power-lift 6, in dependence on the stresses transmitted to the rods 4 by the implement 3 so as to keep these stresses within predetermined limits. This electronic device includes an electronic unit 10 (which may for example be a microprocessor) supplied by a stress sensor and adapted to pilot the hydraulic operating unit 9 in response to the signals coming from this sensor.

According to the invention, the stress sensor is constituted by a strain gauge or extensometric detector applied to the structure of the tractor 1 in the zone of the hydraulic operating unit 9 and thus raised off the ground.

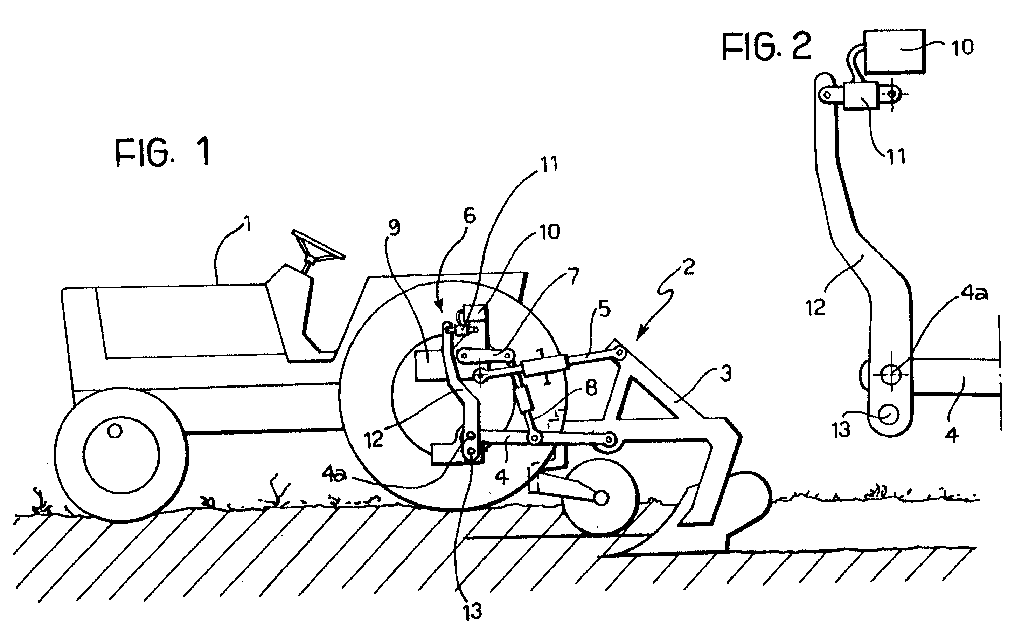

The actuation of the extensometric detector 11 by the rods 4 is achieved through a transmission member constituted by a pivoted lever mounted on the shaft 4a of the rods 4 and articulated at its lower end 13 to the structure of the tractor. The upper end of the lever 12 cooperates with the extensometric detector 11 in a manner clearly visible in Figure 2.

The lever 12 is none other than the control member usually used in power-lifts with stress monitored by conventional mechanical-hydraulic systems. It follows that, for the application of the extensometric detector to the electronically-controlled power-lift 6, the general structure of an ordinary, conventional mechanically-hydraulically controlled power-lift may be used without particular constructional modifications.

Moreover, the raised position of the extensometric detector 11 ensures its effective protection and safe covering against risks of soiling or damage during use of the tractor.

In addition to the compatibility with mechanical-hydraulic control systems, a further advantage resulting from the use of the extensometric detector 11 lies in the fact that, the deformation of the sensitive member of this detector being negligible, the shaft 4a which supports the rods 4 does not move appreciably in use whereby the hysteresis that occurs due to wear in the measurement of stresses transmitted to the rods themselves is virtually nil.

## Claims

1. A tractor comprising a hydraulic power-lift (6) for the linkage (2) of the implements (3), including two lower rods (4) mounted on a support shaft (4a), two arms (7) connected to the lower rods (4), a hydraulic operating unit (9) for operating the two arms (7), an electronic control unit (10) for controlling the hydraulic operating unit (9) and sensor means operatively associated with said electronic control unit (10) for sensing the stresses transmitted in use from the implement (3) to the linkage (2), said sensor means include an extensometric detector (11), characterised in that said extensometric detector (11) is applied to the structure of the tractor and is associated with the upper end of one of the pivoted control levers (12) normally used in conventional mechanical-hydraulic stress controlled devices, the said control lever (12) being mounted on the said support shaft (4a) and articulated at its lower end (13) to the structure of the tractor.

## Patentansprüche

1. Traktor mit einer hydraulischen Hebevorrichtung (6) für die Aufhängung (2) der Geräte (3), wobei die Hebevorrichtung zwei untere Stangen (4), die an einer Tragwelle (4a) befestigt sind, zwei Arme (7), die mit den unteren Stangen (4) verbunden sind, eine hydraulische Betätigungseinheit (9), um die beiden Arme (7) zu betätigen, eine elektronische Steuereinheit (10), um die hydraulische Betätigungseinheit (9) zu steuern, sowie eine Fühlereinrichtung aufweist, die betriebsmäßig der elektronischen Steuereinheit (10) zugeordnet ist, um die im Betrieb vom Gerät (3) zur Aufhängung (2) übertragenen Spannungen abzutasten, wobei die Fühlereinrichtung einen Dehnungsmeßfühler (11) aufweist, dadurch gekennzeichnet, daß der Dehnungsmeßfühler (11) am Aufbau des Traktors angebracht wird und dem oberen Ende von einem der schwenkbaren Steuerhebel (12) zugeordnet ist, der normalerweise in herkömmlichen mechanisch/hydraulischen, belastungsgesteuerten Einrichtungen verwendet wird, wobei der Steuerhebel (12) auf der Tragwelle (4a) befestigt und an seinem unteren Ende (13) am Aufbau des Traktors gelenkig gelagert ist.

## Revendications

1. Tracteur comprenant un relevage hydraulique (6) pour atteler (2) des l'outils (3), comprenant deux barres inférieures (4) montées sur un axe de support (4a), deux bras (7) connectés aux barres inférieures (4), une unité de commande hydraulique (9) pour commander les deux bras (7), une unité de commande électronique (10) pour commander l'unité de commande hydraulique (9) et des moyens de détection associés de manière opérationnelle avec la dite unité de commande électronique (10) pour capter les efforts transmis en fonctionnement par l'outil (3) à l'attelage (2), les dits moyens de détection comprenant un capteur extensiométrique (11), caractérisé en ce que le dit capteur extensiométrique (11) est appliqué à la structure du tracteur et est associé avec la partie supérieure de l'un des leviers de commande pivotants (12) normalement utilisés dans les dispositifs de commande d'effort mécanique-hydraulique traditionnels, le dit levier de commande (12) étant monté sur le dit axe de support (4a) et articulé à son extrémité inférieure (13) sur la structure du tracteur.

FIG. 2

FIG. 1

EP 0 314 640 B1